# EUROPEAN PATENT APPLICATION

(11) **EP 4 474 357 A1**
(43) Date of publication of application: **11.12.2024**
(21) Application number: 24180322.0
(22) Date of filing: 05.06.2024
(51) Int. Cl.: C01G 53/00, H01M 4/00

(54) **POSITIVE ELECTRODE ACTIVE MATERIAL AND LITHIUM SECONDARY BATTERY CONTAINING THE SAME**

(30) Priority: 07.06.2023 KR 20230072806
(71) Applicant: Korea Atomic Energy Research Institute, Daejeon 34057 (KR)
(72) Inventor: KIM, Hyungsub, Sejong-si 30141 (KR); SONG, Seok Hyun, Daejeon 34057 (KR); KIM, Kyoung-Sun, Chungcheongbuk-do 27425 (KR)
(74) Representative: Treeby, Philip David William

(57) **Abstract**

The present invention relates to a positive electrode active material and a lithium secondary battery containing the same, and more particularly to, a positive electrode active material and a lithium secondary battery containing the same, which can induce uniform particle growth of primary particles within secondary particles through a relatively simple process without additional additives or process design, thereby ensuring stability and exhibiting excellent electrochemical properties by controlling atomic- and nano-scale defects.

## Description

### CROSS-REFERENCE TO RELATED APPLICATION

This application claims priority to and the benefit of Korean Patent Application No. 10-2023-0072806, filed on June 07, 2023, the disclosure of which is incorporated herein by reference in its entirety.

### TECHNICAL FIELD

The present invention relates to a positive electrode active material and a lithium secondary battery containing the same, and more particularly to, a positive electrode active material and a lithium secondary battery containing the same, which can induce uniform particle growth of primary particles within secondary particles through a relatively simple process without additional additives or process design, thereby ensuring stability and exhibiting excellent electrochemical properties by controlling atomic- and nano-scale defects.

### BACKGROUND OF THE INVENTION

Lithium secondary batteries are used in various fields such as mobile devices, energy storage systems, and electric vehicles due to their high energy density and voltage, long cycle life, and low self-discharge rate. Core materials of such lithium secondary batteries can be said to be cathode materials, anode materials, electrolytes, and separators, and the importance of positive electrode active materials for lithium secondary batteries to drive them has recently emerged as demand for electric vehicles has expanded.

The positive electrode active material may be classified into LCO (lithium cobalt oxide), NCM (lithium nickel cobalt manganese oxide), NCA (lithium nickel cobalt aluminum oxide), LMO (lithium manganese oxide), LFP (lithium iron phosphate), etc., depending on the configured material, and Ni-based layered positive electrode active materials such as LiNiₓCo_{y}Mn_{z}O₂ and LiNiₓCo_{y}Al_{z}O₂, which have the same structure as LCO, are mainly used as positive electrode active materials for secondary batteries for application to mid- to large-sized electronic devices. The Ni-based layered positive electrode active material has characteristics such as reducing costs by replacing some of the expensive cobalt with nickel, high energy density, and relatively long life, thereby increasing the reversible capacity of a lithium secondary battery.

However, despite the excellent electrical/chemical properties of Ni-based layered positive electrode active materials, their commercial application is limited due to the following problems, such as limitations in cycling characteristics or structural stability.

First, a conventional Ni-based layered positive electrode active material is prepared by mixing with a lithium source using a precursor synthesized by a coprecipitation method and then synthesizing the mixture into a solid phase, and in this case, there is a problem of performance degradation of a lithium secondary battery due to micro-cracks. More specifically, Ni-based layered positive electrode active materials generally have a secondary particle structure of several µm in size in which fine primary particles of submicron size are aggregated, and conventional Ni-based layered positive electrode active materials synthesized by a coprecipitation method cause microcracks in secondary particles during a long-term charging/discharging process, thereby causing new interface exposure and accelerating a side reaction with an electrolyte at the interface, thereby causing degradation of battery life characteristics.

Second, an increase in electrode density (>3.3 g/cc) is required to fully utilize the excellent electro/chemical properties of the Ni-based layered positive electrode active material and realize a high energy density, but the Ni-based positive electrode active material synthesized by the conventional coprecipitation method has low structural stability of secondary particles as described above, and thus secondary particles easily collapse, and in this case, there is a problem that leads to depletion of the electrolyte due to side reactions with the electrolyte. That is, the Ni-based layered positive electrode active material in the form of secondary particles synthesized by the existing coprecipitation method has limitations in terms of exhibiting high energy density characteristics.

Third, the Ni-based layered positive electrode active material may cause battery performance degradation such as a decrease in capacity due to instability of highly oxidized Ni cations and oxygen deintercalation in a host structure. That is, oxygen deintercalation may produce an excessive amount of NiO having a rock salt structure in the layered structure of the positive electrode active material and increase Li by-products. In this case, NiO gradually increases due to repeated charging and discharging to increase resistance, and various side reactions may occur as Li by-products increase, resulting in degradation of battery performance such as capacity reduction.

As such, atomic-scale defects such as oxygen generation and cation mixing in conventional synthesis processes can lead to nano-scale defects such as nanopores, which exist in various sizes from pores within particles to pores between particles, which are factors that hinder the high capacity and stabilization of the Ni-based layered positive electrode active material.

Accordingly, there is an urgent need for research to control atomic- and nano-scale defects by inducing particle growth by uniform reaction of primary particles in secondary particles constituting Ni-based layered positive electrode active materials to fully utilize the excellent electro/chemical properties of Ni-based layered positive electrode active materials, which are in the spotlight as potential cathode materials due to high energy density and increased life span.

### [Related Art Document]

### [Patent Document]

(Patent Document) Korean Patent Laid-Open Publication No. 2016-0094063 (2016.08.09)

### SUMMARY OF THE INVENTION

### Technical Problem

The present invention has been devised in an effort to solve the problems described above, and is directed to providing a positive electrode active material and a method for manufacturing the same that can control nano-scale defects by inducing particle growth by a uniform reaction of primary particles in secondary particles by performing pretreatment at a temperature at which metal hydroxide and lithium precursor begin to react and finally synthesizing the same, thereby solving performance degradation problems in long life span.

In addition, the present invention is also directed to providing a high value-added positive electrode active material of a lithium secondary battery that can be synthesized in a single synthesis process without a special additive and can be used in various industries by synthesizing a positive electrode active material with improved performance without changing an existing process design, and a method for manufacturing the same.

### Technical Solution

To solve the above-mentioned problems, the present invention provides a method of preparing a positive electrode active material, the method including a first step of mixing a metal hydroxide and a lithium precursor to form a precursor mixture, a second step of heat-treating the precursor mixture, and a third step of sintering the heat-treated precursor mixture to prepare LMOₓ.

Where, L is Li (lithium), M is one or more selected from Co (cobalt), Ni (nickel), Al (aluminum), Mn (manganese), and Mg (magnesium), and x is a constant of 0.5 to 2.5.

In addition, according to an exemplary embodiment of the present invention, the LMOₓ may be a compound represented by Chemical Formula 1 below:

[Chemical Formula 1] LiNiₐCo_{b}Mn_{c}O₂

where, it is a constant of 0.8 ≤ a < 1.0, 0 < b < 0.1, 0 < c < 0.1, and a+b+c=1.

In addition, the lithium precursor of the first step may further include a molten salt.

In addition, by the heat treatment of the second step, an intermediate phase represented by Chemical Formula 2 below may be formed to induce uniform growth of primary particles in secondary particles:

[Chemical Formula 2] LiₓM₂₋ₓO₂

where, M is one or more selected from Co (cobalt), Ni (nickel), Al (aluminum), Mn (manganese), and Mg (magnesium), and x is a constant of 0.2 to 0.8.

In addition, the heat treatment of the second step may be carried out at 200 to 400 °C for 2 to 8 hours.

In addition, the metal hydroxide and the lithium precursor of the first step may be mixed in a molar ratio of 1:0.9 to 1.1.

In addition, the third step may be carried out at 600 to 900 °C for 6 to 16 hours.

In addition, the molten salt may be at least one selected from the group consisting of LiNO₃, Li₂SO₄, Li₂CO₃, LiCl, LiI, and LiBr.

In addition, the lithium precursor may be a mixture of either LiOH or LiOH·H₂O and the molten salt in a molar ratio of 1:0.5 to 2.

In addition, the intermediate phase may be contained in an amount of 40 to 80% by weight based on the total weight of the precursor mixture.

In addition, the present invention provides a positive electrode active material in the form of secondary particles in which atomic-scale and nano-scale defects are minimized and represented by Chemical Formula 3 below, the positive electrode active material including: first pores formed between particles having a mean radius of less than 960 Å, and second pores formed within particles having a mean radius of less than 80 Å:

[Chemical Formula 3] LMOₓ

where, L is Li (lithium), M is one or more selected from Co (cobalt), Ni (nickel), Al (aluminum), Mn (manganese), and Mg (magnesium), and x is a constant of 0.5 to 2.5.

In addition, according to an exemplary embodiment of the present invention, the positive electrode active material may be a compound represented by Chemical Formula 4 below:

[Chemical Formula 4] LiNiₐCo_{b}Mn_{c}O₂

where, it is a constant of 0.8 ≤ a < 1.0, 0 < b < 0.1, 0 < c < 0.1, and a+b+c=1.

In addition, the first pores may have a distribution of less than 0.012 cm³/g.

In addition, the second pores may have a distribution of less than 0.0009 cm³/g.

In addition, the present invention provides a lithium secondary battery including the positive electrode active material described above.

### Advantageous Effects

The present invention can control nano-scale defects by inducing particle growth by uniform reaction of primary particles in secondary particles constituting the positive electrode active material, solve performance degradation problems in long life span, and easily synthesize positive electrode active materials having stability and high capacity in one synthesis process without a special additive, hence greatly enhancing their utilization in various industries in which lithium secondary batteries are used.

### BRIEF DESCRIPTION OF THE DRAWINGS

FIG. 1 is an SEM image of a cross-section of a secondary particle observed after 150 cycles with respect to a conventional Ni-based layered positive electrode active material.
FIG. 2 is an SEM image of a cross-section of a secondary particle observed after 150 cycles with respect to a Ni-based layered positive electrode active material according to the present invention.
FIG. 3 is an image showing thermogravimetric analysis results of a positive electrode active material precursor mixture according to an exemplary embodiment of the present invention.
FIG. 4A is a graph showing a phase fraction of an intermediate phase through Rietveld analysis of an X-ray diffraction (XRD) pattern of a positive electrode active material according to an exemplary embodiment of the present invention.
FIG. 4B is a graph showing Rietveld analysis results of a neutron diffraction pattern in an intermediate phase of a positive electrode active material according to an exemplary embodiment of the present invention.
FIG. 5 is a graph showing results of phase fraction analysis of an intermediate product in a process of sintering a positive electrode active material according to an exemplary embodiment of the present invention.
FIG. 6 is a graph analyzing changes in a phase fraction and a lattice constant during primary sintering of a positive electrode active material according to an exemplary embodiment of the present invention.
FIG. 7 is a graph showing XAS analysis results showing particle growth uniformity of secondary particles before/after primary sintering of a positive electrode active material according to an exemplary embodiment of the present invention.
FIG. 8 is an image and a graph showing results of XANES analysis and transmission electron microscope (TEM) analysis of a positive electrode active material according to an exemplary embodiment of the present invention.
FIG. 9 is a graph showing analysis results of XRD and ND patterns of an intermediate phase of a positive electrode active material according to an exemplary embodiment of the present invention.
FIGS. 10 and 11 show SEM images of a cross-section of particles of a positive electrode active material according to an exemplary embodiment of the present invention.
FIGS. 12 to 14 are graphs showing results of SAXS and SANS analysis of a positive electrode active material according to an exemplary embodiment of the present invention.
FIGS. 15 to 19 show XRD and ND pattern analysis, SAXS and SANS analysis, TEM and SEM cross-sections of a positive electrode active material according to an exemplary embodiment of the present invention.
FIG. 20 is a graph showing electrochemical performance of a positive electrode active material according to an exemplary embodiment of the present invention.
FIGS. 21 and 22 are graphs showing electrochemical performance of a positive electrode active material according to another exemplary embodiment of the present invention.

### DETAILED DESCRIPTION OF THE EMBODIMENTS

Hereinafter, exemplary embodiments of the present invention will be described in detail so that those of ordinary skill in the art can readily implement the present invention. The present invention may be embodied in many different forms and is not limited to the embodiments set forth herein.

As described above, the material with the highest capacity among existing layered positive electrode active materials is a high-nickel-based layered positive electrode active material, but it is difficult to synthesize a stoichiometric material due to instability of nickel cations, and there is a problem in that atomic-scale defects such as oxygen generation and cation mixing are formed in the synthesis process. In addition, atomic-scale defects lead to nano-scale defects such as nanopores, and such nano-scale defects exist in various sizes from voids within particles to voids between particles, causing deterioration of life characteristics. In other words, commercialization is limited due to the limitations of cycling characteristics or structural stability.

Accordingly, the present invention provides a method of preparing a positive electrode active material, the method including a first step of mixing a metal hydroxide and a lithium precursor to form a precursor mixture, a second step of heat-treating the precursor mixture, and a third step of sintering the heat-treated precursor mixture to prepare LMOₓ to seek to solve the above-mentioned problems.

Through this, the present invention can control nano-scale defects by inducing particle growth by uniform reaction of primary particles in secondary particles constituting the positive electrode active material, solve performance degradation problems in long life span, and easily synthesize positive electrode active materials having stability and high capacity in one synthesis process without a special additive, hence greatly enhancing their utilization in various industries in which lithium secondary batteries are used.

Hereinafter, the present invention will be described in detail with reference to the drawings.

### Manufacturing method of positive electrode active material

In the method for manufacturing the positive electrode active material according to the present invention, the first step is a step of forming a precursor mixture by mixing a metal hydroxide and a lithium precursor, and the second step is a step of heat-treating the precursor mixture.

Generally, positive electrode active materials used in lithium secondary batteries have a secondary particle structure of several µm size in which fine primary particles of submicron size are aggregated, and the positive electrode active material having a secondary particle structure has a problem in that primary particles, which are aggregated during repeated charging and discharging, are separated, and thus secondary particles are broken and battery characteristics are degraded. This problem is due to the structural properties of the secondary particles, and in particular, the Ni-based layered positive electrode active material, which has characteristics such as reducing costs by replacing some of the expensive cobalt with nickel, high energy density, and relatively long life, thereby increasing the reversible capacity of a lithium secondary battery, has a problem in that atomic-scale defects such as oxygen generation and cation mixing are formed, so when atomic-scale defects and nano-scale defects such as nanopores occur, they exist in various sizes from voids within particles to voids between particles, causing deterioration of life characteristics.

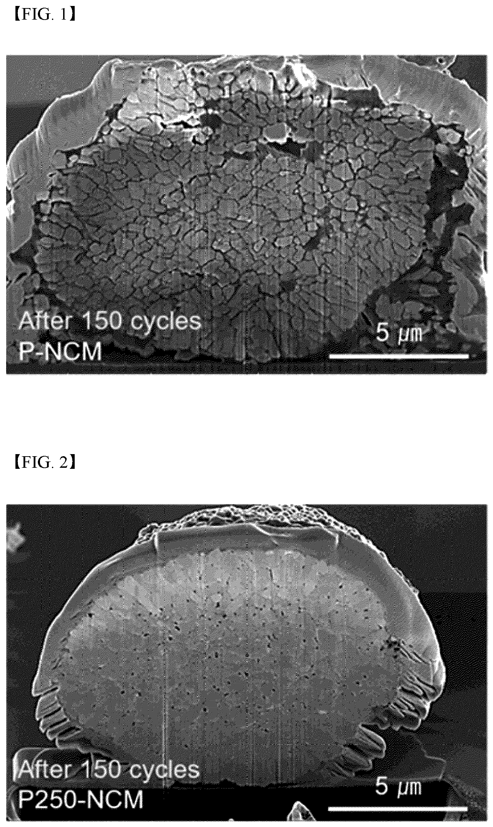

More specifically, referring to FIG. 1, a cross-section of the secondary particles after 150 cycles is observed for a conventional Ni-based layered positive electrode active material, and as a result, it can be seen that rapid cracks of the secondary particles are observed due to non-uniform contraction/expansion in the process of penetration and charging/discharging of the electrolyte between the macropores generated in the synthesis process. Accordingly, measures to suppress the formation of atomic and nano defects are being mentioned. For example, various methods have been reported to design synthesis conditions that control synthesis temperature, pretreatment time, lithium content, etc. as an attempt to synthesize positive electrode active materials having a stable atomic structure through doping using various dopants (Al, B, Zr, Nb, Ta, etc.). However, these existing studies focus on defect control at the atomic level, and the correlation between various scale defects and how to suppress them has not been introduced at all.

Accordingly, in the present invention, the precursor mixture prepared in the first step is pretreated at a temperature at which the precursor mixture starts to react through the second step, thereby inducing particle growth due to a uniform reaction of the primary particles in the secondary particles and controlling nano-scale defects, hence solving the problem of performance degradation in the long-term life of the positive electrode active material in the form of secondary particles. That is, referring to FIG. 2, when the pretreatment of the second step according to the present invention described later is performed, it is confirmed that the secondary particles are well maintained, and thus it can be seen that the formation of pores in the particles may be minimized in the synthesis process, thereby minimizing atomic defects and nano defects.

To this end, the present invention first identified the temperature at which a precursor mixture that may cause a rapid change in atomic defects that may cause nano defects begins to react and forms an intermediate phase, and afterwards, it was confirmed that forming a sufficiently uniform intermediate phase according to this temperature could suppress rapid changes at the atomic scale.

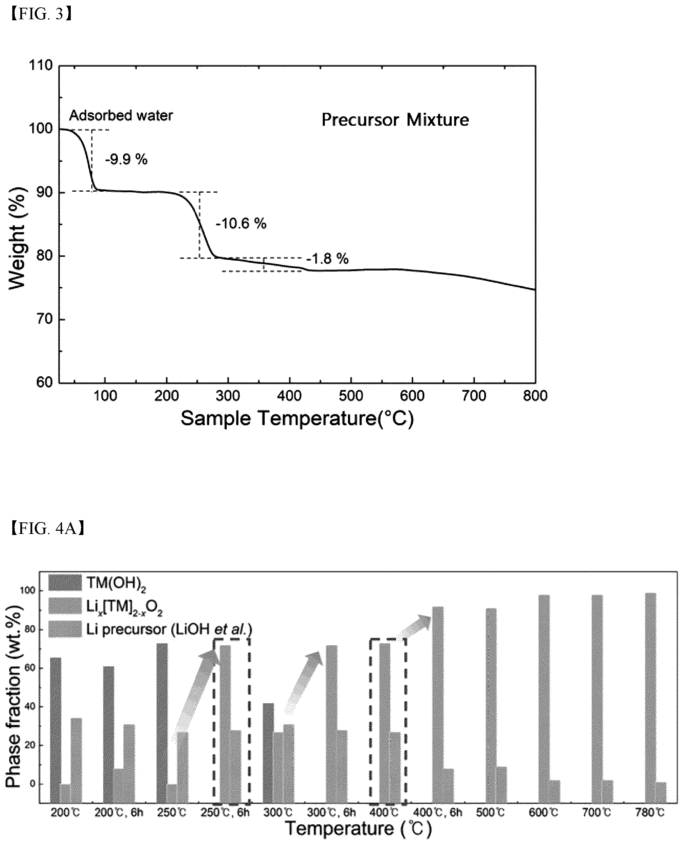

More specifically, referring to FIG. 3, it can be seen through thermogravimetric analysis (TGA) that the largest weight of the precursor mixture is reduced from about 200°C to 250°C, and a relatively small weight is reduced from about 250°C to 400°C, and the reaction begins to occur from about 200°C.

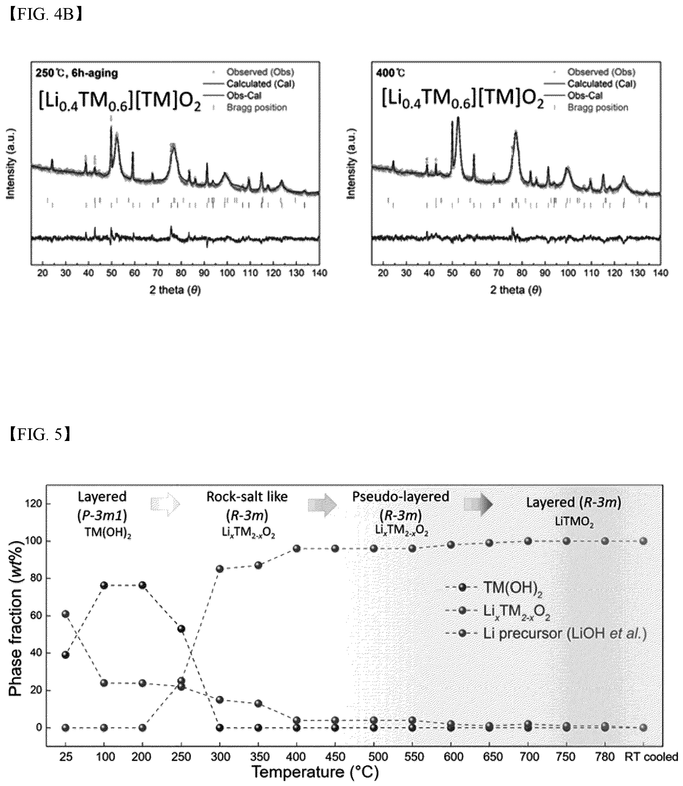

In addition, referring to FIG. 4A, comparing the phase fractions of the products by Rietveld analysis of X-ray diffraction (XRD) patterns, it can be seen that a precursor mixture exists immediately after reaching room temperature to 250°C, whereas sintering at 250°C for 6 hours decomposes all precursor mixtures and forms an intermediate phase of about 80 wt.% or more, and as a result, it can be seen that the reaction of the precursor mixture begins to occur from 250°C, similar to the TGA result. In addition, referring to FIG. 4B, it can be seen that the composition of the intermediate product is LiₓTM₂₋ₓO₂ (x=~0.4), as a result of Rietveld analysis of a neutron diffraction (ND) pattern.

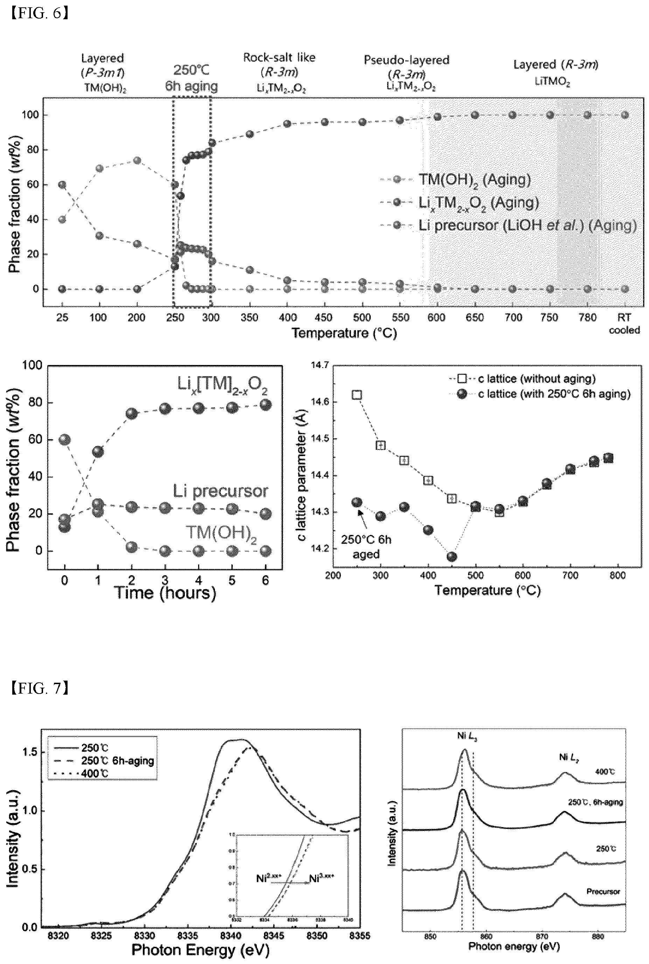

Similarly, referring to FIGS. 5 and 6, by analyzing the X-ray diffraction (XRD) pattern for the phase fraction of intermediate products during the synthesis process of the precursor mixture, it can be confirmed that the precursor mixture began to react immediately after reaching 250°C without primary sintering, and all transition metal precursors were decomposed at 400°C, and most of the reaction was completed. In addition, unlike when synthesizing up to 780°C synthesis temperature without primary sintering, when synthesizing up to 780°C synthesis temperature after primary sintering at 250°C for 6 hours, it can be seen that it alleviates the change in lattice constant to the c-axis, and through this, it can be confirmed that forming a sufficiently uniform intermediate phase at 250°C, a point at which the reaction takes place, can suppress rapid changes at the atomic scale.

Summarizing these results, in the present invention, it can be seen that through the heat treatment of the second step, the intermediate phase represented by the following Chemical Formula 2 is formed in an amount of 40 to 80 wt% based on the total weight of the precursor mixture, thereby inducing uniform growth of primary particles in the secondary particles.

[Chemical Formula 2] LiₓM₂₋ₓO₂

where, M is one or more selected from Co (cobalt), Ni (nickel), Al (aluminum), Mn (manganese), and Mg (magnesium), and x is a constant of 0.2 to 0.8.

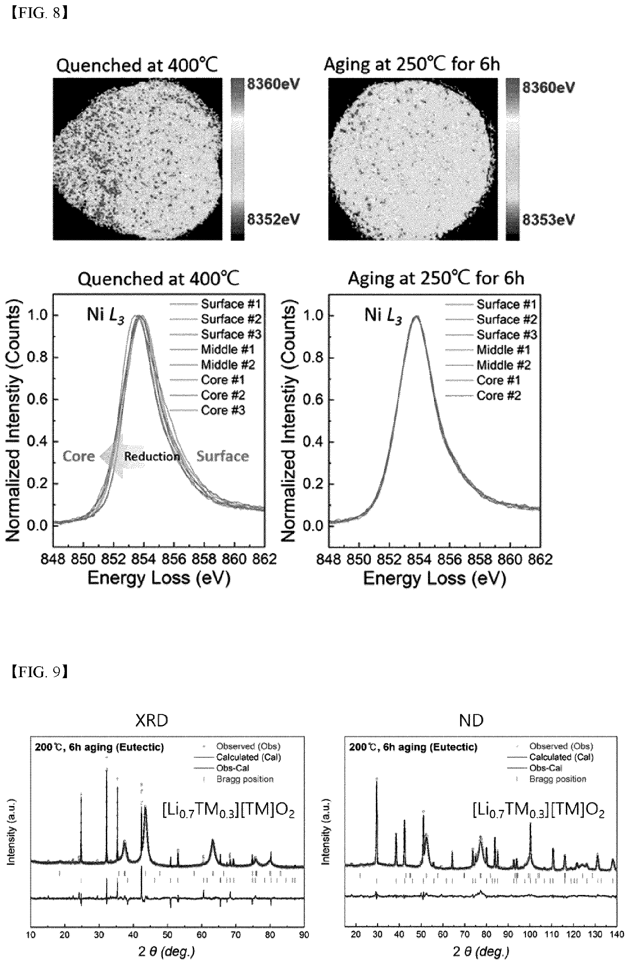

More specifically, referring to FIG. 7, it can be seen that by comparing the bulk and surface oxidation number of a 250°C 6-hour sintered intermediate-phase sample and an intermediate-phase sample immediately after 400°C with the two sample having the same phase fraction, the bulk oxidation numbers of the two samples were identical, but the surface oxidation number has a higher photon energy of the Ni Ls-edge of the 400°C sample, indicating that it has a higher surface oxidation number than the 250°C 6-hour sintered sample, and referring to FIG. 8 for the same purpose, XANES analysis and transmission electron microscopic analysis also show that in the case of the Ni oxidation number distribution of the secondary particles between the 250°C 6-hour sintered sample and the sample immediately after 400°C, in the sample immediately after 400°C, the Ni oxidation number increases from the core to the surface, whereas the sample sintered for 6 hours at 250°C has a uniform Ni oxidation number as a whole.

As described above, the present invention may induce particle growth by a uniform reaction of primary particles in secondary particles by performing pretreatment at a temperature at which the precursor mixture starts to react and finally synthesizing the same, thereby controlling nano-scale defects, and to this end, the pretreatment of the second step may be carried out at 200 to 400°C for 2 to 8 hours, more preferably at 230 to 350°C for 2 to 6 hours, based on the precursor mixture prepared in the first step. In this case, if the performance temperature of the second step is less than 200°C, there may be a problem that the LiₓM₂₋ₓO₂ intermediate phase is formed to be less than 10 wt.% as shown in FIG. 4A, which has no effect on nano defect control, and in addition, if the performance temperature of the second step exceeds 400°C, there may be a problem that nano defects are formed due to rapid changes in atomic defects during the sintering process. In addition, if the performance time of the second step is less than 2 hours, there may be a problem in that the formation of the LiₓM₂₋ₓO₂ intermediate phase becomes less than 50 wt.%, reducing the effect on nano defect control, and if the performance time of the second step exceeds 8 hours, it may be disadvantageous in terms of process operation.

In this case, the transition metal source of the metal hydroxide of the precursor mixture may be one or more compounds selected from oxides or hydroxides of Ni, Co, Mn, Al, Mg, and V, and in addition, the transition metal source of the lithium precursor of the precursor mixture may be LiOH, LiOH·H₂O, or Li₂CO₃, but is not limited thereto, and various lithium-containing compounds capable of supplying lithium elements may be used.

In addition, according to an exemplary embodiment of the present invention, the metal hydroxide and the lithium precursor may be mixed in a molar ratio of 1:0.9 to 1.1. In this case, if the molar ratio of the metal hydroxide to the lithium precursor is less than 1:0.9, there may be a problem in that NiO having a rock-salt structure may be formed in the positive electrode active material, thereby degrading electrochemical performance, and in addition, if the molar ratio of the metal hydroxide to the lithium precursor is greater than 1:1.1, there may be a problem of forming a large amount of residual lithium compounds such as Li₂CO₃ or LiOH.

Meanwhile, in the present invention, to induce more uniform synthesis of the primary particles in the secondary particles, the lithium precursor may further include a molten salt to perform the first and second steps described above.

More specifically, referring to FIG. 9, the lithium precursor further contains molten salt, and from the results of comparing the phase fractions of the products by analyzing XRD and ND patterns during the synthesis process of the precursor mixture, the lithium precursor has a lower melting point when using the molten salt than when using only LiOH, and thus, it can be confirmed that the reaction began at a lower temperature of 200°C than when only LiOH was used, and as a result, all precursor mixtures are decomposed and an intermediate phase of about 80% is formed after sintering at 200°C for 6 hours. This shows that the faster lithiation is induced than solid phase synthesis using only the existing LiOH, so that the faster lithium diffusion of the synthesis process is possible.

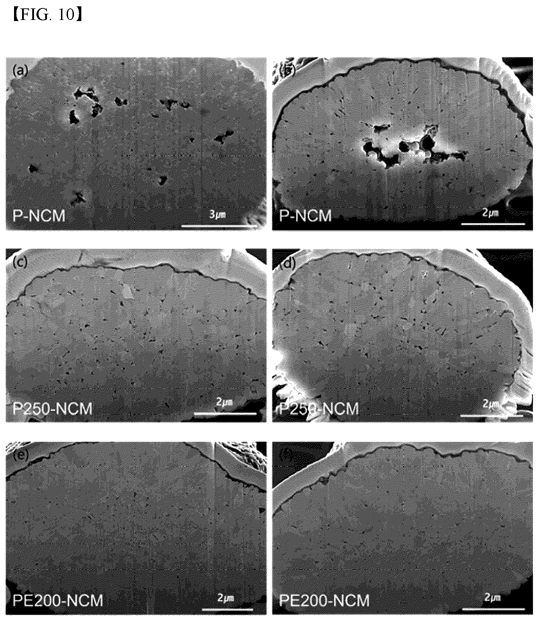

Similarly, referring to FIG. 10, comparing the cross-section of the final synthesized secondary particle between when synthesized using LiOH as a lithium precursor and when synthesized by further including a molten salt in the lithium precursor, it can be seen that when the lithium precursor is synthesized by further including the molten salt, secondary particles close to zero-pore with high density are formed. Through this, when a positive electrode active material is synthesized by further including a molten salt in a lithium precursor, a positive electrode active material having nano defects close to zero can be prepared.

To this end, the molten salt may be at least one selected from the group consisting of LiNO₃, Li₂SO₄, Li₂CO₃, LiCl, LiI, and LiBr, and more preferably LiNO₃ and Li₂SO₄. In this case, before the transition metal compound is decomposed while emitting gas, LiₓM₂₋ₓO₂ (x>0.6) intermediate phases containing a large amount of lithium are effectively generated at a lower temperature, which may be more advantageous to reduce nano defect formation in the sintering process.

In addition, in the case of the lithium precursor, either LiOH or LiOH·H₂O and the molten salt may be mixed at a molar ratio of 1:0.5 to 2, and more preferably, may be mixed at a molar ratio of 1:0.9 to 1.05. In this case, if the lithium precursor and the molten salt are mixed in a molar ratio of less than 1:0.5 or more than 1:2, there may be a problem in that a higher secondary sintering temperature is required out of the eutectic temperature of the molten salt.

Next, the third step of the manufacturing method of positive electrode active material according to the present invention is a step of manufacturing LMOₓ by sintering the heat-treated precursor mixture, where L is Li (lithium), M is at least one selected from Co (cobalt), Ni (nickel), Al (aluminum), Mn (manganese), and Mg (magnesium), and x is a constant of 0.5 to 2.5.

The third step is in accordance with the purpose of the present invention, and is not particularly limited because a known method and conditions for manufacturing a positive electrode active material by sintering the precursor mixture that has undergone the first and second steps may be used, but preferably, the third step may be carried out at 600 to 900°C for 6 to 16 hours to manufacture a final positive electrode active material.

According to this preferred embodiment, the LMOₓ can obtain a compound represented by Chemical Formula 1.

[Chemical Formula 1] LiNiₐCo_{b}Mn_{c}O₂

where, it is a constant of 0.8 ≤ a < 1.0, 0 < b < 0.1, 0 < c < 0.1, and a+b+c=1.

In this case, if the performance temperature of the third step is less than 600 °C, there may be a problem that a pseudo-layered phase in which lithium and transition metals are partially disorderly arranged rather than a layered cathode material synthesized by separating the lithium layer and the transition metal layer, as shown in FIG. 5, and in addition, if the performance temperature of the third step exceeds 900 °C, there may be a problem of forming a rock-salt structure NiO phase. In addition, if the performance time of the third step is less than 4 hours, there may be a problem that lithium and transition metals in the crystal structure are arranged in some disorder between layers, and in addition, if the performance time of the third step exceeds 16 hours, there may be a problem in that lithium is sublimated and some lithium-deficient crystal structures are synthesized.

### Positive electrode active material

Next, the positive electrode active material according to the present invention will be described. However, in order to avoid duplication, description of parts that have the same technical idea as the manufacturing method of the positive electrode active material described above will be omitted.

The positive electrode active material according to the present invention is a positive electrode active material in the form of secondary particles in which atomic- and nano-scale defects are minimized, and may be a compound represented by Chemical Formula 3, or Chemical Formula 4 according to a more preferred embodiment.

[Chemical Formula 3] LMOₓ

where, L is Li (lithium), M is one or more selected from Co (cobalt), Ni (nickel), Al (aluminum), Mn (manganese), and Mg (magnesium), and x is a constant of 0.5 to 2.5.

[Chemical Formula 4] LiNiₐCo_{b}Mn_{c}O₂

In this case, since an object of the present invention is to control nano-scale defects by inducing particle growth by a uniform reaction of primary particles in secondary particles by performing pretreatment at a temperature at which metal hydroxide and lithium precursor begin to react and finally synthesizing the same, the positive electrode active material may include first pores formed between particles having a mean radius of less than 960 Å and second pores formed within particles having a mean radius of less than 80 Å.

More specifically, the second pores formed within the particle may have a mean radius of preferably less than 80 Å, more preferably less than 75 Å, and most preferably less than 70 Å.

In this case, the first pore (macropore) refers to a pore with a radius of 500 Å or more formed between particles, the second pore (mesopore) refers to a pore with a radius of 50 to 500 Å formed within the particle, and the third pore (micropore) refers to a pore with a radius of 50 Å or less formed within the particle.

During sintering, micropores are formed due to precursor separation or the like as the reaction is performed. In this case, as the sintering temperature gradually increases, the micropores spread and merge to form mesopores. In this case, micropores and mesopores mainly exist inside the primary particles. Then, as the sintering temperature rises further, some of the micropores and mesopores that existed inside the primary particle move to the surface of the particle and merge, and this movement causes the pores formed on the surface to combine with the pores on the surface of adjacent particles to form macropores as interparticle pores.

In this case, since micropores and mesopores exist inside the particle, they can act as nanoscale defects in the primary particle. The presence of these defects may cause additional exposure of the interface and side reactions with the electrolyte, ultimately leading to deterioration of lifespan. Therefore, the smaller the mean radius and distribution value of micropores and mesopores are, the more advantageous they are for maintaining battery lifespan, preventing deterioration, and the like. Accordingly, if the mean radius of the second pores corresponding to the mesopores is 80 Å or more, it may be disadvantageous in terms of battery performance, such as a rapid decrease in battery capacity due to a high level of defects. In addition, if the distribution of the second pores is 0.0009 cm³/g or more, it may be disadvantageous in terms of battery performance for the same reason.

Macropores are pores between particles, and when they are included in the positive electrode active material below a certain level, they can exert a buffering effect during battery operation, which can be advantageous in terms of battery performance, but when they are included a certain level or more, it may be disadvantageous in terms of battery performance. Accordingly, if the mean radius of the first pores is 960 Å or more, it may be disadvantageous in terms of battery performance, such as a rapid decrease in battery capacity due to a high level of defects. In addition, if the distribution of the first pores is 0.013 cm³/g or more, it may be disadvantageous in terms of battery performance, such as a rapid decrease in battery capacity for the same reason. However, if the distribution of the first pores is less than 0.013 cm³/g, how even the distribution is is a more important factor than the distribution value, and the more uniform the distribution, the less the risk of collapse is in terms of structure, and a stable buffer effect may be exhibited, which is advantageous in terms of battery performance.

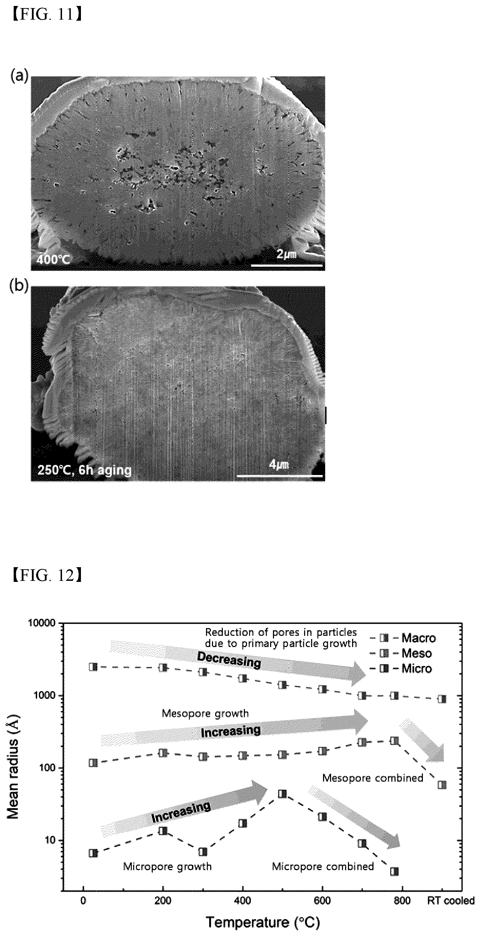

More specifically, referring to FIG. 11, it was confirmed that rapid lattice structure changes and non-uniform reactions are induced when synthesized without primary sintering, and many defects of hundreds of nanometers are formed around the core, and rapid lattice changes occurring at the atomic scale can lead to nanoscale defects. Furthermore, it can be seen that forming a uniform intermediate phase can suppress rapid changes not only at the atomic scale but also at the nanoscale.

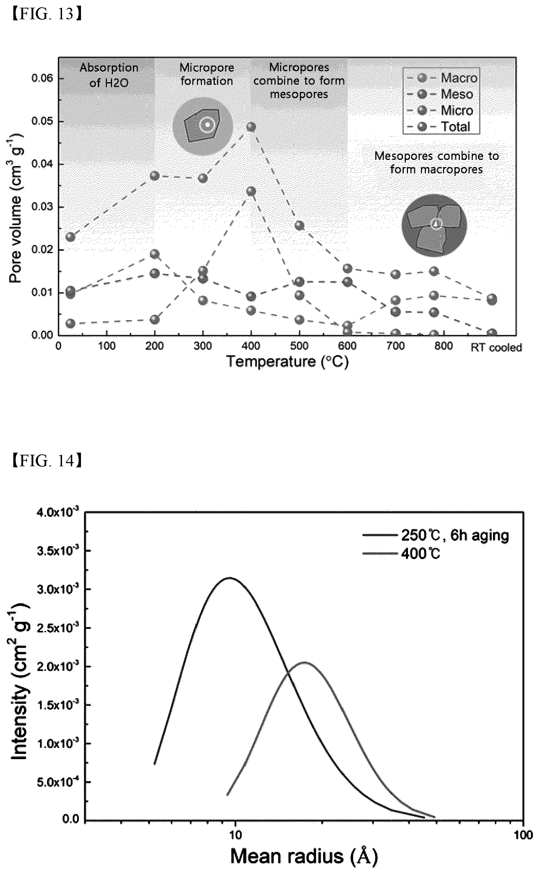

Meanwhile, referring to FIGS. 12 to 14, which compare and analyze changes in sizes and distributions of the first, second, and third pores, it can be seen that the macropores decreased as the synthesis temperature increased due to the primary particles that gradually grew during synthesis, and in addition, as for the distribution of the second and third pores, micro-pores began to occur from 300°C after the reaction began, and the most pores were observed at 400°C where the reaction occurred rapidly, and it can be seen that the rapid increase in micro-pores was induced by the rapid reaction. In addition, from 500°C, the mesopores combine to increase macropores, which is consistent with the observation of many giant pores in the particle cross-sectional SEM image of FIG. 10. In this case, FIGS. 12 to 13 show the results of measuring the size distribution of particles in a process of synthesizing a positive electrode active material without primary sintering.

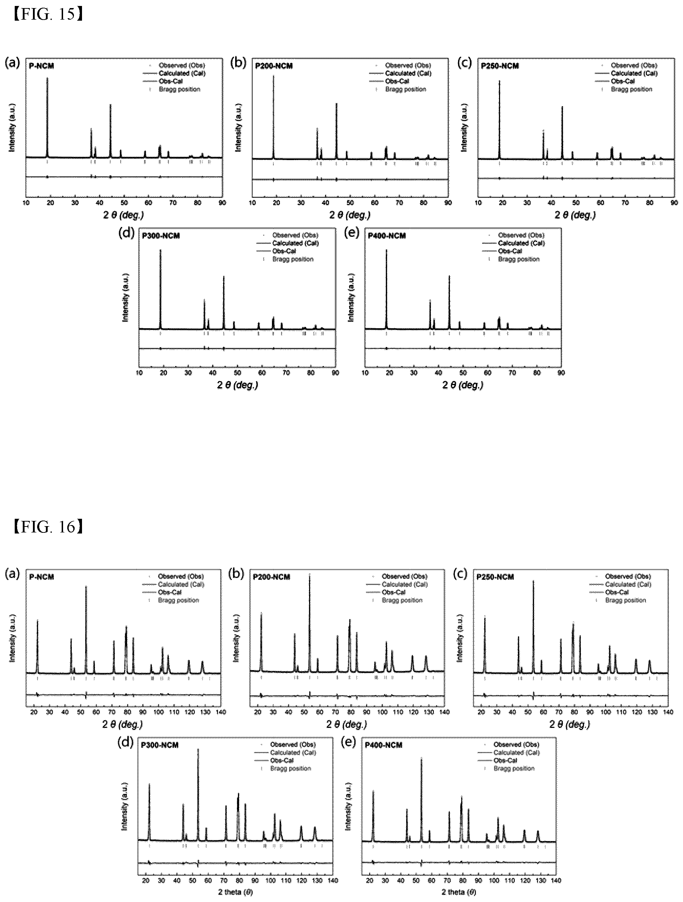

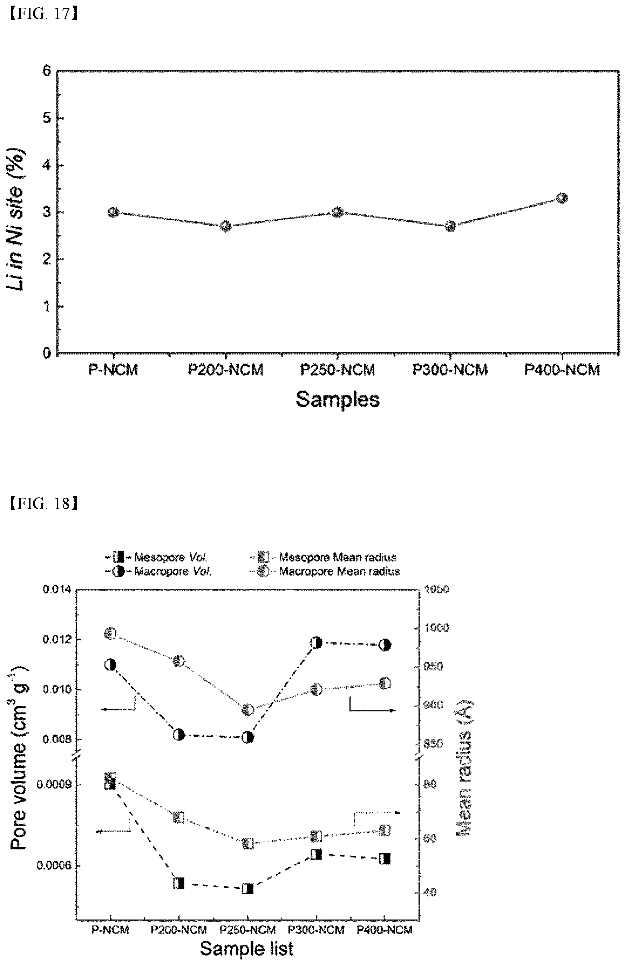

In addition, when it is finally synthesized without primary sintering and when it is synthesized after primary sintering at 200-400°C, from the structural analysis results of FIGS. 15 to 19, it can be seen that when synthesized without primary sintering, many macro, meso pores of the largest size are observed, internal and interparticle pores are observed, and non-uniformly distributed pores are aggregated, and thus huge pores are locally observed, whereas when synthesized after primary sintering, the smallest size of few macro, meso pores are observed and small interparticle pores are uniformly spread to form dense secondary particles. This means that when the low-temperature primary sintering is performed during the synthesis process, a slow uniform reaction is induced, and the formation of uniform pores of small size with the uniform formation of the intermediate phase LiₓM₂₋ₓO₂ (0.2<x<0.8) leads to the final synthesis.

As such, the present invention can control nano-scale defects by inducing particle growth by uniform reaction of primary particles in secondary particles constituting the positive electrode active material, solve performance degradation problems in long life span, and easily synthesize positive electrode active materials having stability and high capacity in one synthesis process without a special additive, and thus, through the lithium secondary battery including the positive electrode active material according to the present invention, the utilization in various industries can be greatly enhanced.

Hereinafter, the present invention will be described in more detail through the following examples, but the following examples are not intended to limit the scope of the present invention, which should be construed to aid understanding of the present invention.

### Example 1 - Manufacturing of positive electrode active material

To manufacture the positive electrode active material according to the present invention, a Ni_{0.92}Co_{0.03}Mn_{0.05}(OH)₂ + LiOH·H₂O precursor mixed sample was prepared. In this case, the precursor mixture was synthesized under the conditions of a final synthesis temperature of 780°C under the conditions of a transition metal compound : lithium compound = 1 : 1 to 1.03 molar ratio and a gas atmosphere of 400-500mL/min O₂. The first sintering was performed at 200°C for 6 hours, and the second sintering was performed at 780°C for 12 hours to synthesize the final positive electrode active material LiNi_{0.92}Co_{0.03}Mn_{0.05}O₂.

### Example 2 to 4 - Manufacturing of positive electrode active material

A positive electrode active material was produced in the same manner as in Example 1, but the primary sintering temperature was different as shown in Table 1 below.

### Example 5 - Manufacturing of positive electrode active material

A positive electrode active material was produced in the same manner as in Example 1, except that a mixed sample of Ni_{0.92}Co_{0.03}Mn_{0.05}(OH)₂ + LiOH·H₂O: LiNO₃ or Li₂SO₄ (2:3 ratio) precursor was used, and the primary sintering temperature was changed as shown in Table 1 below.

### Comparative Example 1 - Manufacturing of positive electrode active material

A positive electrode active material was produced in the same manner as in Example 1 without performing primary sintering as shown in Table 1 below.

**[Table 1]**

| | Synthetic phase | Primary sintering temperature (the second step) | Secondary sintering temperature (the third step) |
|---|---|---|---|
| Comparative Example 1 | P-NCM (pristine) | X | 780°C |
| Example 1 | P200-NCM | 200°C | 780°C |
| Example 2 | P250-NCM | 250°C | 780°C |
| Example 3 | P300-NCM | 300°C | 780°C |
| Example 4 | P400-NCM | 400°C | 780°C |
| Example 5 | PE200-NCM | 200°C | 780°C |

### Experimental Example 1 - Thermogravimetric analysis

As shown in FIG. 3, thermogravimetric analysis (TGA) was performed to set the primary sintering temperature for uniform synthesis. As a result, it was confirmed that the largest weight of the precursor mixture decreased from about 200°C to 250°C, and the relatively small weight decreased from about 250°C to 400°C, and the reaction began to occur from about 200°C.

### Experimental Example 2 - X-ray diffraction (XRD) pattern Rietveld analysis

Referring to FIG. 4A, an X-ray diffraction (XRD) pattern during the synthesis process of the precursor mixture was subjected to Rietveld analysis to compare the phase fractions of the products. It was confirmed that only Ni_{0.92}Co_{0.03}Mn_{0.05}(OH)₂ and LiOH were present immediately after reaching 250°C at room temperature, whereas all Ni_{0.92}Co_{0.03}Mn_{0.05}(OH)₂ were decomposed and about 80 wt.% of LiₓM₂₋ₓO₂ (0.2<x<0.8) R-3m intermediate phase was formed after sintering for 6 hours at 250°C. Immediately after reaching 300°C, the precursor mixture already partially reacted to form about 30 wt.% of LiₓM₂₋ₓO₂ (0.2<x<0.8), and after sintering for 6 hours at 300°C, the same phase fraction as sintering for 6 hours at 250°C was confirmed. Immediately after reaching 400°C, it was confirmed that all transition metal precursors were already decomposed, and as a result, it shows that the reaction of the precursor mixture begins to occur from 250°C, similar to the TGA results.

### Experimental Example 3 - Neutron diffraction pattern Rietveld analysis

Referring to FIG. 4B, in order to quantify the lithium content of the intermediate product, neutron diffraction patterns of the 250°C 6 hours primary sintered intermediate phase and 400°C intermediate phase having the same phase fraction were analyzed through Rietveld analysis. As a result, it was found that both phases were R-3m layered bulk structures of LiₓM₂₋ₓO₂ (x=~0.4).

### Experimental Example 4 - Phase fraction analysis of intermediate product

Referring to Fig. 5, the phase fraction of the intermediate product was compared by analyzing X-ray diffraction (XRD) patterns during the real-time synthesis process of the precursor mixture, and similarly, it was confirmed that the precursor mixture began to react immediately after reaching 250°C without primary sintering, and all transition metal precursors were decomposed at 400°C and most of the reaction was finished.

### Experimental Example 5 - Analysis of changes in phase fraction and lattice constant during primary sintering

As shown in FIG. 6, the XRD pattern during the first sintering in real time at the reaction temperature of 250°C was further analyzed. After sintering at 250°C for 3 hours, all transition metal precursors were decomposed. Unlike when synthesizing up to 780°C synthesis temperature without primary sintering, it was further confirmed that when synthesizing up to 780°C synthesis temperature after primary sintering at 250°C for 6 hours, it alleviates the change in lattice constant to the c-axis. This means that forming a sufficiently uniform LiₓM₂₋ₓO₂ (0.2<x<0.8) intermediate phase at 250°C, the time point at which the reaction takes place, can suppress rapid changes at the atomic scale.

### Experimental Example 6 - XAS analysis

Referring to FIG. 7, to confirm the particle growth uniformity of secondary particles before and after primary sintering, the bulk and surface oxidation numbers of the 250°C 6-hour sintered intermediate phase sample and the intermediate phase sample immediately after 400°C were compared through Hard, Soft X-ray absorption spectroscopy (XAS) analysis. As a result, it was confirmed that the bulk oxidation numbers of the two samples were identical, but the surface oxidation number has a higher photon energy of the Ni Ls-edge of the 400°C sample, indicating that it has a higher surface oxidation number than the 250°C 6-hour sintered sample,

### Experimental Example 7 - XANES analysis and transmission electron microscope analysis

Referring to FIG. 8, the distribution of Ni oxidation number of the secondary particles between the sample sintered at 250°C for 6 hours and the sample immediately after 400°C was checked through transmission X-ray microscopy (TXM) - X-ray Absorption Near Edge Structure (XANES) analysis and transmission electron microscopy (TEM) - Electron Energy Loss Spectroscopy (ELS) analysis. As can be seen from the figure, the sample immediately after 400°C shows that the oxidation number of Ni increases from the core to the surface, while the sample sintered for 6 hours at 250°C has a uniform Ni oxidation number as a whole.

### Experimental Example 8 - SEM cross-section analysis

Referring to FIG. 11, in the intermediate phase of 400°C without primary sintering, many large pores were observed toward the inside of the secondary particles, while the cross-section of the secondary particles in the intermediate phase, which was first sintered at 250°C, was very uniform. This shows rapid lattice structure changes and non-uniform reactions are induced when synthesized without primary sintering, and many defects of hundreds of nanometers are formed around the core, and it was confirmed that rapid lattice changes occurring at the atomic scale observed in the previous diffraction analysis could lead to nanoscale defects. In addition, it has been shown that the formation of uniform LiₓM₂₋ₓO₂ (0.2<x<0.8) intermediate phase can suppress rapid changes not only at the atomic scale but also at the nanoscale.

### Experimental Example 9 - SAXS and SANS analysis

Referring to FIGS. 12 to 14, for the first time, the mean pore size and distribution change of secondary particles using X-ray and neutron incineration scattering analysis (SAXS and SANS) were compared and analyzed to quantitatively analyze the nanopores of secondary particles generated during the synthesis process. In this case, FIGS. 12 to 13 show the results of measuring the size distribution of particles in a process of synthesizing a positive electrode active material without primary sintering. From room temperature to 500°C, the size of micropores gradually grew due to the reaction of the precursor mixture, and from 600°C to 780°C, the size of mesopores grew as micropores were combined. Macropores decreased as the synthesis temperature increased by primary particles that gradually grew during synthesis. In addition, the distribution of pores was most observed at 400°C, where micropores began to occur from 300°C after the reaction began, and the rapid increase in macropores was induced by the rapid reaction, which is consistent with the observation of many macropores in the 400°C particle cross-sectional SEM image in FIG. 8. In addition, it was confirmed that the number of macropores increased as the mesopores were combined from 500°C. When comparing the particle distribution of the sample sintered for 6 hours at 250°C, which is similar to the sample immediately after 400°C, when the largest micro-pore is formed, it was confirmed that the sample sintered for 6 hours at 250°C had a smaller and more uniform micro-pore distribution. This shows that the overall degree of reaction of the two samples is similar, but the heat treatment process at low temperature can induce a uniform reaction within the secondary particle.

### Experimental Example 10 - Radius and content distribution of the first and second pores of positive electrode active materials

Tables 2 and 3 below show the radius and content distribution of the positive electrode active material prepared without primary sintering and the first and second pores of the positive electrode active material prepared after primary sintering.

**[Table 2]**

| | Synthetic phase | Radius (Å) of the first pore (Macro) | Radius (Å) of the second pore (Meso) |
|---|---|---|---|
| Comparative Example 1 | P-NCM (pristine) | 993.47 | 82.62 |
| Example 1 | P200-NCM | 957.64 | 68.07 |
| Example 2 | P250-NCM | 894.79 | 58.30 |
| Example 3 | P300-NCM | 921.16 | 60.98 |
| Example 4 | P400-NCM | 929.07 | 63.18 |

**[Table 3]**

| | Synthetic phase | Content of the first pore (Macro) (cm³/g) | Content of the second pore (Meso) (cm³/g) |
|---|---|---|---|
| Comparative Example 1 | P-NCM (pristine) | 0.011 | 0.0009038 |
| Example 1 | P200-NCM | 0.0082 | 0.0005360 |
| Example 2 | P250-NCM | 0.0081 | 0.0005158 |
| Example 3 | P300-NCM | 0.0120 | 0.00064340 |
| Example 4 | P400-NCM | 0.0118 | 0.00062624 |

### Experimental Example 11 - Analysis of SEM cross-section, XRD and ND patterns

Referring to FIGS. 15 to 19, comparisons between the final synthesized sample without primary sintering and the final phase samples obtained by primary sintering at 200 to 400°C are shown in FIGS. 15 to 19. Bulk structure analysis by XRD and ND analysis was similar for all samples, but pore quantitative analysis by SAXS/SANS analysis was different. In the sample (P-NCM) synthesized without primary sintering, many macro, meso pores of the largest size were observed, whereas in the sample (P250-NCM) synthesized after primary sintering at 250°C, few macro, meso pores of the smallest size were observed. This means that when the low-temperature primary sintering is performed during the synthesis process, a slow uniform reaction is induced, and the formation of uniform pores of small size with the uniform formation of the LiₓM₂₋ₓO₂ (0.2<x<0.8) intermediate phase leads to the final synthesis. To confirm the information about the pores obtained by SAXS/SANS analysis, the TEM and SEM cross-sections of the representative samples P-NCM and P250-NCM were compared. In P-NCM, it was confirmed that pores inside and between particles were observed, and the non-uniformly distributed pores were aggregated and thus huge pores were locally observed, whereas P250-NCM formed high-density secondary particles in which small interparticle pores were uniformly spread, which is consistent with the results of SAXS/SANS analysis.

### Experimental Example 12- Comparison of electrochemical performance

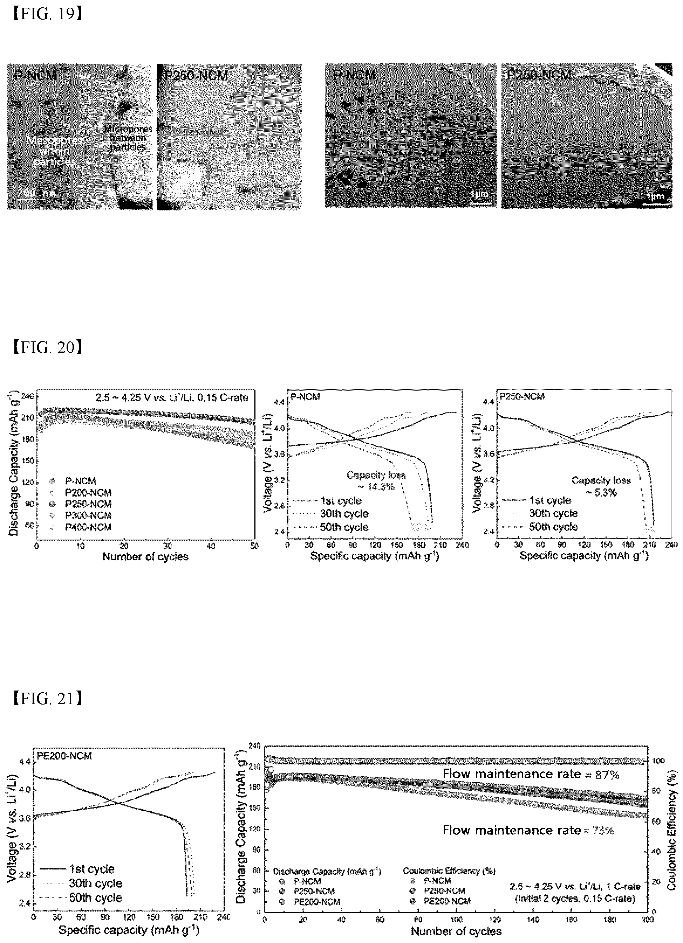

Referring to FIG. 20, electrochemical performance of samples directly synthesized without primary sintering and samples primarily sintered at 200 to 400°C were compared. It was confirmed that the electrochemical cycle characteristics of all primary sintered samples except P-NCM were improved, and the electrochemical characteristics (cycle and capacity) of P250-NCM, which was synthesized most uniformly, were the most improved.

### Experimental Example 13 - Analysis of SEM, XRD, and ND patterns for Example 5

Referring to FIG. 9 and FIG. 10, XRD and ND patterns during the synthesis process of the eutectic precursor mixture were analyzed to compare the phase fractions of the products. The reaction started at a lower temperature of 200°C when the eutectic molten salt was used because it had a lower melting point than when only the existing LiOH was used, as a result, it was confirmed that all Ni_{0.92}Co_{0.03}Mn_{0.05}(OH)₂ was decomposed and about 80% of LiₓM₂₋ₓO₂ (0.6<x<0.8) was formed after sintering at 200°C for 6 hours. This shows that the lithiation of the mother phase is induced faster than the solid phase synthesis using only the existing LiOH, and thus the fast lithium diffusion of the eutectic synthesis process is confirmed. The cross-section of the final synthesized secondary particle was compared with the use of LiOH, which is an existing lithium precursor, and the use of eutectic molten salt. As a result, it was confirmed that PE200-NCM synthesized through the eutectic process has secondary particles close to zero-pore with the highest density. This shows that the eutectic synthesis process is closest to a method of synthesizing a positive electrode active material with nano defects close to zero.

### Experimental Example 14 - Comparison of electrochemical performance for Example 5

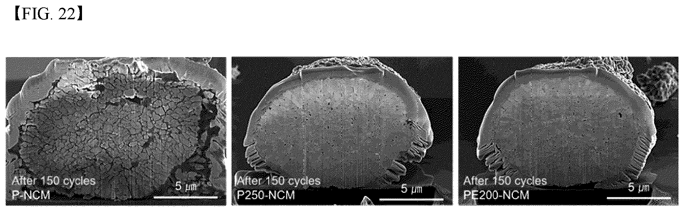

Referring to FIGS. 21 and 22, the electrochemical cycle characteristics of the three samples were compared. As shown in the left drawing, there was no cycle characteristic degradation up to 50 cycles based on 0.15 C-rate, and long-term life characteristics of 200 cycles were improved compared to samples (P-NCM, P250-NCM) using the existing lithium precursor LiOH. In addition, as a result of observation of the cross-section of the secondary particles after 150 cycles, in the P-NCM synthesized in the existing synthesis process, rapid cracks of secondary particles were observed due to non-uniform shrinkage/expansion in the process of penetrating the electrolyte between macropores generated in the synthesis process and charging and discharging, whereas the P250-NCM synthesized after the primary sintering and the PE200-NCM synthesized in the eutectic process confirmed that the secondary particles were well maintained as first, and proved that minimizing the formation of pores in the particles in the synthesis process is an important factor in the synthesis of stable positive electrode active materials.

## Claims

1. A method for manufacturing a positive electrode active material, comprising:
a first step of mixing a metal hydroxide and a lithium precursor to form a precursor mixture;
a second step of heat-treating the precursor mixture; and
a third step of sintering the heat-treated precursor mixture to manufacture LMOₓ,
where, L is Li (lithium), M is one or more selected from Co (cobalt), Ni (nickel), Al (aluminum), Mn (manganese), and Mg (magnesium), and x is a constant of 0.5 to 2.5.

2. The method for manufacturing a positive electrode active material of claim 1, wherein the LMOₓ is a compound represented by Chemical Formula 1 below:
[Chemical Formula 1] LiNiₐCo_{b}Mn_{c}O₂
where, it is a constant of 0.8 ≤ a < 1.0, 0 < b < 0.1, 0 < c < 0.1.

3. The method for manufacturing a positive electrode active material of claim 1, wherein the lithium precursor of the first step further comprises a molten salt.

4. The method for manufacturing a positive electrode active material of claim 1, wherein by the heat treatment of the second step, an intermediate phase represented by Chemical Formula 2 below is formed to induce uniform growth of primary particles in secondary particles:
[Chemical Formula 2] LiₓM₂₋ₓO₂
where, M is one or more selected from Co (cobalt), Ni (nickel), Al (aluminum), Mn (manganese), and Mg (magnesium), and x is a constant of 0.2 to 0.8.

5. The method for manufacturing a positive electrode active material of claim 1, wherein the heat treatment of the second step is carried out at 200 to 400 °C for 2 to 8 hours.

6. The method for manufacturing a positive electrode active material of claim 1, wherein the heat treatment of the second step is carried out at 230 to 350 °C for 2 to 6 hours.

7. The method for manufacturing a positive electrode active material of claim 1, wherein the metal hydroxide and the lithium precursor of the first step are mixed in a molar ratio of 1:0.9 to 1.1.

8. The method for manufacturing a positive electrode active material of claim 1, wherein the third step is carried out at 600 to 900 °C for 4 to 16 hours.

9. The method for manufacturing a positive electrode active material of claim 3, wherein the molten salt is at least one selected from the group consisting of LiNO₃, Li₂SO₄, Li₂CO₃, LiCl, LiI, and LiBr, and the lithium precursor is a mixture of either LiOH or LiOH·H₂O and the molten salt in a molar ratio of 1:0.5 to 2.

10. The method for manufacturing a positive electrode active material of claim 4, wherein the intermediate phase is contained in an amount of 40 to 80% by weight based on the total weight of the precursor mixture.

11. A positive electrode active material in the form of secondary particles in which atomic-scale and nano-scale defects are minimized and represented by Chemical Formula 3 below, the positive electrode active material comprising:
first pores formed between particles having a mean radius of less than 960 Å; and
second pores formed within particles having a mean radius of less than 80 Å:
[Chemical Formula 3] LMOₓ
where, L is Li (lithium), M is one or more selected from Co (cobalt), Ni (nickel), Al (aluminum), Mn (manganese), and Mg (magnesium), and x is a constant of 0.5 to 2.5.

12. The positive electrode active material of claim 11,
wherein the positive electrode active material is a compound represented by Chemical Formula 4 below:
[Chemical Formula 4] LiNiₐCo_{b}Mn_{c}O₂
where, it is a constant of 0.8 ≤ a < 1.0, 0 < b < 0.1, 0 < c < 0.1.

13. The positive electrode active material of claim 11, wherein the first pores have a distribution of less than 0.013 cm³/g, and the second pores have a distribution of less than 0.0009 cm³/g.

14. The positive electrode active material of claim 13, wherein the second pores have a distribution of less than 0.0007 cm³/g.

15. lithium secondary battery comprising a positive electrode active material according to claim 11.
